# EUROPÄISCHE PATENTSCHRIFT

(11) **EP 2 934 939 B1**
(45) Veröffentlichungstag und Bekanntmachung des Hinweises auf die Patenterteilung: **23.01.2019**
(21) Anmeldenummer: 13794815.4
(22) Anmeldetag: 15.11.2013
(51) Int. Cl.: B60K 37/02

(54) **ANZEIGEVORRICHTUNG MIT DREI DIMENSIONALEM OLED-DISPLAY FÜR EIN FAHRZEUG**
DISPLAY DEVICE COMPRISING A THREEE-DIMENSIONAL OLED DISPLAY FOR A VEHICLE
DISPOSITIF D'AFFICHAGE AVEC ÉCRAN OLED TRIDIMENSIONNEL POUR UN VÉHICULE

(30) Priorität: 19.12.2012 DE 102012024949
(43) Veröffentlichungstag der Anmeldung: 28.10.2015
(73) Patentinhaber: Audi AG, 85045 Ingolstadt (DE)
(72) Erfinder: DIEDERICHS, Lutz, 85092 Kösching (DE); WUNDERLICH, Matthias, 85053 Ingolstadt (DE)
(74) Vertreter: Brandt, Kai
(86) Internationale Anmeldenummer: PCT/EP2013/003452
(87) Internationale Veröffentlichungsnummer: WO 2014/094947

(56) Entgegenhaltungen:
- WO-A1-2008/055606
- WO-A2-2006/108617
- DE-A1- 19 943 578
- US-A1- 2003 162 312
- US-A1- 2006 012 971

## Beschreibung

Die Erfindung betrifft eine Anzeigevorrichtung gemäß dem Oberbegriff des Anspruchs 1, die zur Darstellung von Information und zur Anordnung in einem Innenraum eines Fahrzeugs ausgebildet ist.

In vielen Fahrzeugen werden bereits Anzeige- und/oder Bedienvorrichtungen eingesetzt, mittels welchen eine Vielzahl von Funktionen des Fahrzeugs angezeigt oder bedient werden können. Solche Anzeige- und/oder Bedienvorrichtungen vereinen meist mehrere Arten der Anzeige oder Bedienung, z.B. mechanische Zeiger, einzelne Displays, Tastschalter oder berührungsempfindliche Bildschirme oder auch Vorrichtungen zur berührungslosen Bedienung über Sprachsteuerung oder für optisch erfasste Bewegungen. Sie können als Kombiinstrumente bezeichnet werden.

Seit einiger Zeit werden so genannte organic light emitting diode (OLED)-Displays auch bei Anzeigeinstrumenten in Kraftfahrzeugen verwendet, insbesondere da sie eine flächige Hinterleuchtung ermöglichen und energiearm sind und wenig Bauraum beanspruchen, grundsätzlich also gut in bereits bestehende Armaturenbrett-Konfigurationen integriert werden können.

Die gattungsbildende DE 199 43 578 A1 zeigt ein Anzeigeinstrument für ein Kraftfahrzeug mit einer zwischen zwei Elektroden eingeschlossenen lichtemittierenden Polymerschicht in Form einer OLED-Lichtquelle, welches nur eine geringe Bauhöhe erfordert und als einheitliche Lichtquelle betrieben werden kann, wobei in der zweidimensional ausgebildeten Polymerschicht eine Durchbrechung vorgesehen sein kann, mittels welcher die OLED-Lichtquelle in Verbindung mit einem analogen Zeigerinstrument zur Hinterleuchtung des Zeigerinstruments eingesetzt werden kann. Die OLED-Lichtquelle ist beidseitig auf einer Vorderseite und einer Hinterseite von sich zweidimensional erstreckenden transparenten Elektroden sowie von jeweils einer Abdeckung umfasst, wobei die hinterseitige Abdeckung zugleich ein Gehäuseelement des Anzeigeinstruments bildet und mit einer Leiterplatte verbunden ist. Die für das gezeigte sich zweidimensional erstreckende Anzeigeinstrument verwendete OLED-Lichtquelle und die entsprechenden Elektroden sind grundsätzlich auch dreidimensional verformbar, wobei zwecks optimaler Anpassung an eine Oberflächenkontur eines Armaturenbretts des Kraftfahrzeugs auch mehrfach gewölbte Oberflächen des Anzeigeinstruments realisiert werden können.

Die Offenlegungsschrift DE 10 2005 049 127 A1 zeigt eine Vorrichtung zur Anzeige von Information in einem Fahrzeug, welche ein flexibles Display insbesondere in Form einer OLED-Folie aufweist, das eine dreidimensional verlaufende Körperoberfläche einer Einrichtung, insbesondere einer Mittelkonsole, des Fahrzeugs bildet und aktiv Licht emittieren kann.

Die Offenlegungsschrift DE 10 2010 010 575 A1 zeigt eine Anzeigevorrichtung für ein Fahrzeug, mit einer Anzeigetafel, einer berührungssensitiven Oberfläche und einer transparenten Schicht, wobei die Anzeigevorrichtung auf beliebige Weise gekrümmt sein kann, insbesondere zwecks Anordnung an einem Armaturenbrett, und die Anzeigetafel eine OLED-Anzeige umfassen kann, welche in Verbindung mit einer berührungsempfindlichen Schicht vorgesehen sein kann.

Die Offenlegungsschrift DE 10 2009 040 314 A1 zeigt eine in nahezu beliebiger Kontur biegbare Anzeige für ein Fahrzeug mit einer monochromen Anzeigevorrichtung, wobei die Anzeige zur nahtlosen Integration in gewölbte Interieur-Oberflächen ausgebildet ist und eine OLED-Anzeige umfasst, welche ein Farbfilter insbesondere in Form einer transparenten Folie aufweisen kann, ohne dass eine zusätzliche Hintergrundbeleuchtung erforderlich ist.

Die Offenlegungsschrift DE 10 2004 054 769 A1 zeigt ein Einbau-Kombinationsinstrument für ein Kraftfahrzeug, mit einer elektromechanischen Anzeigevorrichtung, insbesondere einem Rundinstrument, und mit einer davon entkoppelt angeordneten elektronischen Displayeinrichtung in Form von einer OLED-Anzeigevorrichtung, die in Blickrichtung eines Betrachters auf ein Armaturenbrett angeordnet ist, wobei ein planarer teildurchlässiger Spiegel zwischen der Anzeigevorrichtung und der Displayeinrichtung vorgesehen ist.

Die Offenlegungsschrift US 2005/0030256 A1 zeigt ein klappbares Informationsdisplay für ein Kraftfahrzeug, welches in einem gekrümmten Armaturenbrett des Kraftfahrzeugs angeordnet ist und als transparentes OLED-Display ausgebildet sein kann, wobei das Display in einem starren Rahmen angeordnet ist.

Es ist eine Aufgabe der Erfindung, eine Anzeigevorrichtung mit einem Display bereitzustellen, mittels welcher auf einfache Weise eine Anzeige von Information erzielbar ist und die auf einfache Weise aufgebaut ist. Dabei ist das Display bevorzugt auch auf flexible Weise in die Anzeigevorrichtung integrierbar, und auch zweckdienlich in Verbindung mit weiteren AnzeigeInstrumenten einsetzbar.

Diese Aufgabe wird durch eine Anzeigevorrichtung mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Die Erfindung geht aus von einer Anzeigevorrichtung für ein Fahrzeug, die zur Darstellung von Information und zur Anordnung in einem Innenraum des Fahrzeugs in Bezug auf eine Blickrichtung eines Fahrers des Fahrzeugs ausgebildet ist, insbesondere zur Anordnung an einem Armaturenbrett hinter einem Lenkrad in Bezug auf eine Vorwärtsrichtung des Fahrzeugs, mit:
- einer Anzeigeeinrichtung, die mit einer Einrichtung zum Betreiben der Anzeigeeinrichtung verbindbar ist, insbesondere zum Betreiben in Abhängigkeit eines Messwertes für einen Zustand des Fahrzeugs;
- einem eine dreidimensionale Geometrie aufweisenden OLED-Display zum insbesondere flächigen Emittieren von Licht, wobei das OLED-Display in Blickrichtung gesehen, insbesondere in Vorwärtsrichtung gesehen, mit der Anzeigeeinrichtung überlappend angeordnet ist und im Überlappungsbereich einen Durchlass aufweist, über welchen die Anzeigeeinrichtung mit der Einrichtung verbindbar ist; und
- einem Stützrahmen, der zur Anordnung des OLED-Displays ausgebildet ist.

Erfindungsgemäß ist vorgesehen, dass das OLED-Display in einem Kuppelbereich an den Stützrahmen gekuppelt ist und in einem Anzeigebereich derart geometrisch geformt ist, dass es unabhängig von dem Stützrahmen angeordnet ist, insbesondere von dem Stützrahmen entkoppelt ist. Bevorzugt ist das OLED-Display unabhängig von dem Stützrahmen dreidimensional geometrisch geformt. Mit anderen Worten kann das OLED-Display geometrisch, also bezüglich dessen dreidimensionaler Formgebung, zumindest teilweise von dem Stützrahmen losgelöst, also unabhängig sein. Dies kann dadurch erzielt werden, dass das OLED-Display in einem Teilabschnitt die Geometrie des Stützrahmens übernimmt oder zumindest dieselben Abmessungen aufweist oder an derselben Stelle angeordnet ist, und in einem anderen hauptsächlichen Abschnitt unabhängig angeordnet ist, wahlweise frei im Raum. Eine Lagerung erfolgt dann über den Teilabschnitt bzw. Kuppelbereich und wahlweise auch über den Durchlass. Über den Durchlass kann insbesondere auch eine Zentrierung erfolgen.

Der Kuppelbereich ist dabei bevorzugt ein Randbereich des OLED-Displays, also eine Außenkante, die sich an eine Innenfläche des Stützrahmens schmiegt oder dort irgendwie befestigt ist. Der Anzeigebereich ist z.B. ein mittiger Bereich des OLED-Displays, der frei in Bezug auf eine optimale optische Darstellbarkeit oder im Hinblick auf geometrischen Anforderungen eines bestimmten Armaturenbrettes geformt sein kann. Der Anzeigebereich kann aber auch ein Teilabschnitt entlang des Umfangs bzw. äußeren Randes des OLED-Displays sein.

Als eine zumindest teilweise geometrische Entkopplung von dem Stützrahmen ist dabei bevorzugt zu verstehen, dass das OLED-Display zwar einerseits an irgendeinem Teilabschnitt, insbesondere in einem Randbereich, von dem Stützrahmen gestützt bzw. gehalten ist, andererseits aber auch in weiten Teilabschnitten unabhängig von der Geometrie des Stützrahmens frei formbar sein kann. Ist der Stützrahmen z.B. als kreisrunde oder ovale ringartige Blende ausgebildet, welche ein Innenvolumen umgrenzt, in welchem das OLED-Display angeordnet werden kann, so weist das OLED-Display z.B. in seinem äußeren Randbereich überall oder in einem Teilabschnitt entlang des Umfangs des Randbereichs zumindest annähernd die Geometrie des Stützrahmens auf, jedoch in einem Bereich innerhalb des vom Stützrahmen umgrenzten Volumens eine davon unabhängige dreidimensionale Geometrie, die im Hinblick auf funktionelle Erfordernisse, Designansprüche, den Aufbau eines Armaturenbretts oder die Lage und Größe von Anzeigeeinrichtungen definiert sein kann.

Der Stützrahmen kann in Blickrichtung zumindest teilweise vor dem OLED-Display angeordnet sein. Der Stützrahmen kann dann auch als Frontrahmen bezeichnet werden, welcher einen Anzeigebereich bzw. einen Anzeigeraum umgrenzt, in welchem das OLED-Display angeordnet ist. Der Stützrahmen ist dabei eine Art Strukturbauteil, welches eine Einbindung der Anzeigevorrichtung in ein Armaturenbrett ermöglichen kann. Der Stützrahmen kann die Funktion der Anbindung der Anzeigevorrichtung an einen Instrumententafelträger oder eine Tragstruktur des Armaturenbrettes sicherstellen und begrenzt die maximalen Ausdehnungen der Anzeigenvorrichtungen. Der Stützrahmen bildet eine Art mechanische bzw. strukturelle Schnittstelle für die gesamte Anzeigevorrichtung, über welche die Anzeigevorrichtung auch gelagert sein kann. Wahlweise ist der Stützrahmen jedoch in erster Linie eine Blende, welche vor allem die haptische und optische Integration der Anzeigevorrichtung in das Armaturenbrett sicherstellt.

Durch das teilweise Entkoppeln der Geometrie des OLED-Displays von der Geometrie eines Stützrahmens oder irgendeiner Abdeckung mit einer vergleichbaren Funktion kann eine Integration des OLED-Displays auf besonders flexible Weise erfolgen. Die 3D-Geometrie des OLED-Displays kann unabhängig von der Abdeckung bzw. dem Stützrahmen gewählt werden, indem sichergestellt ist, dass das OLED-Display nur in einem Randbereich zu dem Stützrahmen gekuppelt ist. Mit anderen Worten wird das OLED-Display bevorzugt nur in einem Randbereich von dem Stützrahmen gelagert.

Gemäß einer Variante ist das OLED-Display in einem Randbereich von dem Stützrahmen umgrenzt und in dem Durchlass zentriert. D.h., eine Umrahmung und mechanische Stütze kann durch den Stützrahmen sichergestellt werden, und eine eindeutige, exakte Anordnung kann wahlweise allein oder zusätzlich zu der Lagerung an dem Stützrahmen durch die Lagerung in dem Durchlass sichergestellt werden. Bevorzugt ist in dem Durchlass eine Hülse vorgesehen, insbesondere eine Art Buchse, welche mit einem rohrartigen Abschnitt zum Lagern einer Zeigerfahne der Anzeigeeinrichtung korrespondiert. Durch diese Art der Zentrierung kann trotz der großen Flexibilität und Freiheitsgrade bei der Ausgestaltung des OLED-Displays eine definierte Anordnung in Bezug auf die weiteren Komponenten der Anzeigevorrichtung sichergestellt werden.

Die dreidimensionale Geometrie kann durch eine einfach oder mehrfach gebogene Form des OLED-Displays eingestellt werden, z.B. eine rein konvexe oder konkave Wölbung in Verbindung mit ebenen Abschnitten, oder eine abschnittsweise sowohl konvexe als auch konkave Wölbung. Die erfindungsgemäße Eingliederung des OLED-Displays in die Anzeigevorrichtung ermöglicht eine große geometrische Vielfalt, und es können räumliche Hierarchien geschaffen werden, insbesondere durch 3D-Effekte in der Darstellung. Gleichzeitig kann höchsten Designansprüchen gerecht werden, was gerade im Zusammenhang mit einem Armaturenbrett für einen Fahrer von großer Bedeutung ist. Ein gutes Design ist nicht nur aus ästhetischen Gründen erstrebenswert, sondern auch im Hinblick auf die Fahrsicherheit: ein aufgeräumtes und übersichtliches Armaturenbrett mit wahlweise auch hierarchisch in Bezug auf ihre jeweilige aktuelle Relevanz dargestellter Information kann das Verhalten des Fahrers positiv beeinflussen und zu mehr Sicherheit beitragen, insbesondere in Gefahrensituationen.

Bevorzugt ist das OLED-Display in Vorwärtsrichtung (x), also in üblicher Blickrichtung des Fahrers, hinter dem Lenkrad hinter der Anzeigeeinrichtung angeordnet, also z.B. hinter einem Drehzahlmesser und/oder einer Geschwindigkeitsanzeige. Eine Anordnung hinter der Anzeigeeinrichtung ist dabei bevorzugt als eine Anordnung hinter einem Zeiger der Anzeigeeinrichtung zu verstehen. Die Anzeigeeinrichtung kann neben einem Zeiger auch ein Ziffernblatt oder dergleichen Hintergrund aufweisen. Das OLED-Display kann dann wahlweise vor oder hinter dem Ziffernblatt angeordnet sein. Ist es vor dem Ziffernblatt angeordnet, so ist es zumindest in einem nicht beleuchteten Zustand (semi-)transparent und lässt die auf dem Ziffernblatt wiedergegebene Information durchscheinen. Auch in einem bestromten, leuchtenden Zustand kann das OLED-Display (semi-)transparent ausgebildet sein. Ist es hinter dem Ziffernblatt angeordnet, so ist bevorzugt das Ziffernblatt (semi-)transparent.

Als eine Anzeigevorrichtung ist dabei bevorzugt eine Vorrichtung zu verstehen, mittels welcher eine Darstellung und wahlweise auch Bedienung von Funktionen des Fahrzeugs oder allgemeiner Information möglich ist. Die Anzeigevorrichtung kann dann auch als Kombiinstrument oder (Fahrer-)Informationseinrichtung bezeichnet werden, das bzw. die auch eine Bedienfunktion erfüllt.

Als eine Anzeigeeinrichtung ist dabei bevorzugt eine Einrichtung zu verstehen, mittels welcher ein Messwert kontinuierlich angezeigt werden kann, insbesondere auf mechanische Weise, also beispielsweise mittels eines Zeigers. Die Anzeigeeinrichtung kann als eine analoge oder mechanische Anzeigeeinrichtung bezeichnet werden bzw. ausgebildet sein. Die Anzeigeeinrichtung kann einen oder mehrere (mechanische) Zeiger aufweisen, sie kann bereits durch einen einzelnen Zeiger gebildet sein. Als Beispiele können eine Uhr mit mehreren Zeigern, eine Kraftstoffverbrauchsanzeige, eine Geschwindigkeits- oder Drehzahlanzeigeeinrichtung genannt werden. Die Einrichtung zum Betreiben der Anzeigeeinrichtung ist dann bevorzugt ein Stellantrieb, welcher eine Hohlwelle oder dergleichen aufweist oder damit verbunden ist, durch welche die Zeigereinrichtung eingestellt werden kann. Nichtsdestotrotz kann die Anzeigeeinrichtung auch eine elektrische oder auf andere Weise als mechanisch funktionierende Anzeigeeinrichtung sein, wobei die Einrichtung zum Betreiben der Anzeigeeinrichtung dann bevorzugt eine Art Recheneinheit ist, welche z.B. über eine elektrische Leitung mit der Anzeigeeinrichtung durch den Durchlass verbindbar ist.

Das gebogene OLED-Display liefert den Vorteil eines verminderten Bedarfs an Bauraumvolumen, denn das OLED-Display kann sehr dünn ausgeführt sein, insbesondere auch dünner als TFT-Displays (thin film transistor displays). Auch kann der Wärmehaushalt, d.h. die Abführung von Verlustleistung oder allgemein das Kühlen des OLED-Displays, auf einfachere Weise sichergestellt werden, insbesondere weil das OLED-Display eine geringere Verlustleistung aufweist und damit eine geringere Wärmeentwicklung hervorruft als andere Displays. Ferner ist ein OLED-Display in energetischer Hinsicht von besonderem Vorteil, so dass z.B. auch tagsüber eine Hinterleuchtung von Anzeigen möglich ist, ohne das Bordnetz spürbar zu belasten.

Auch kann durch das gebogene OLED-Display die Eingliederung einer Beleuchtungseinrichtung in die Anzeigevorrichtung auf optisch verbesserte Weise erfolgen, denn das OLED-Display kann in eine im Hinblick auf Designanforderungen optimierte Geometrie gebracht werden. Auf dem OLED-Display können dabei z.B. Informationen zu Tankinhalt, Innen- oder Außentemperatur, Fahrzeuggeschwindigkeit, Motordrehzahl, Warnhinweise oder auch andere den Fahrzustand, die Fahrsicherheit oder Infotainment betreffende Informationen dargestellt werden.

Die Kopplung kann dabei durch irgendeine Verbindung, sei sie mechanischer und/oder elektrischer Art, hergestellt werden. Mittels des Durchlasses kann sichergestellt werden, dass die Integration des OLED-Displays in die Anzeigevorrichtung über einen großen Bereich der Anzeigevorrichtung ausgeführt sein kann, und eine einheitliche Hinterleuchtung ermöglicht wird.

Der Durchlass kann ein Ausbruch in beliebiger Form sein, z.B. kreisrund, elliptisch, oder auch mit einer zumindest annähernd rechteckigen Geometrie. Durch den Durchlass kann ein Zeiger oder auch eine Taste oder ein Stützrahmenelement gesteckt werden. Das OLED-Display selbst ist in Abhängigkeit der Geometrie des Durchlasses angesteuerbar. Dazu weist es eine Ansteuerungsmatrize bzw. Ansteuermatrix auf, die eine um den Durchlass herumgeführte Struktur hat. Die Ansteuerungsmatrize ist durch Zeilen und Spalten gebildet, die grundsätzlich parallel zueinander verlaufen, im Bereich des Durchlasses jedoch um den Durchlass geführt sind und diesen umrahmen. Die Zeilen und Spalten sind nicht unterbrochen, sondern verlaufen kontinuierlich. Die Zeilen- und Spaltenansteuerung kann also auch bei einem Durchlass auf einfache Weise durchgeführt werden, ohne dass weitere Schnittstellen zu einzelnen Zeilen oder Spalten hergestellt werden müssen. Die Ansteuermatrix weist dabei bevorzugt eine Segmentierung auf, welche neben einer flächigen (Hintergrund-)Beleuchtung auch eine Darstellung von einzelnen Symbolen, Schriftzeichen oder Bildpunkten ermöglicht.

Bevorzugt ist der Stützrahmen ferner zur definierten Anordnung des OLED-Displays in Bezug auf die Anzeigeeinrichtung ausgebildet. Hierzu kann der Stützrahmen eine innenliegende Kontur aufweisen, die mit der Außenkontur des OLED-Displays zumindest abschnittsweise in einem Randbereich des OLED-Displays korrespondiert, so dass das OLED-Display in dem Stützrahmen zentriert und/oder formschlüssig fixiert werden kann. Bevorzugt kann das OLED-Display von hinten (entgegen der Blickrichtung) mit dem Stützrahmen verbunden werden, insbesondere in dem Stützrahmen verrastet werden.

Die Struktur der Ansteuerungsmatrix kann während der Herstellung des OLED-Displays vorgesehen werden, insbesondere in eine Polymerschicht des OLED-Displays eingebracht werden. Der übliche Aufbau eines OLED-Displays ohne Durchlass muss dabei nicht verändert werden, vielmehr reicht es aus, die Struktur der Ansteuerungsmatrix mit Anode und Kathode auf die Kontur des Durchlasses anzupassen.

Zur Herstellung des Durchlasses bzw. Ausbruchs können je nach verwendetem Material gängige Fertigungsverfahren zum Einsatz kommen. Als Materialien kommen z.B. Glas, Kunststoff und Polymerschichten, insbesondere Polymerfolien in Betracht. Glas kann dabei mittels Wasserstrahlschneiden, Lasern oder gezieltem Brechen bearbeitet werden, wobei eine Nachbearbeitung von Kanten zweckdienlich sein kann, z.B. durch Schleifen. Folien können z.B. durch Stanzen und/oder Lasern in die gewünschte Geometrie gebracht werden.

Bevorzugt ist der Stützrahmen zur Anordnung des OLED-Displays relativ in Bezug auf die Anzeigeeinrichtung ausgebildet. Mit anderen Worten kann das OLED-Display mittels des Stützrahmens relativ zur Anzeigeeinrichtung ausgerichtet und positioniert bzw. ortfest gelagert werden.

Gemäß einem vorteilhaften Ausführungsbeispiel weist das OLED-Display eine in Blickrichtung konkave Wölbung auf, welche in Blickrichtung seitlich des Überlappungsbereichs angeordnet ist, wobei das OLED-Display im Überlappungsbereich mit dem Stützrahmen gekuppelt, insbesondere verbunden ist. Eine Verbindung ist dabei bevorzugt auf direkte Weise hergestellt, also ohne Zwischenschaltung eines weiteren Elements. Hierdurch kann das OLED-Display in dem Überlappungsbereich unmittelbar und auf einfache Weise mit dem Stützrahmen gekuppelt werden. Der Stützrahmen kann dabei gleichzeitig ein Ziffernblatt und das OLED-Display einfassen. Der Kuppelbereich kann dabei einem Teilbereich des Überlappungsbereichs entsprechen und/oder unmittelbar angrenzend an diesen angeordnet sein.

Bevorzugt weist die Anzeigeeinrichtung einen Zeiger auf, welcher in Bezug auf die Blickrichtung vor dem OLED-Display angeordnet ist und mit der Einrichtung verbindbar ist. In diesem Fall ist die Einrichtung bevorzugt ein mechanischer Stellantrieb. Hierdurch kann eine Integration und Kopplung der Beleuchtungsfunktion mit der Anzeigefunktion des Zeigers erfolgen. Das OLED-Display kann in Abhängigkeit der Position des Zeigers Zusatzinformation anzeigen, um die durch den Zeiger übermittelte Information zu verstärken oder zu gewichten.

Gemäß einem vorteilhaften Ausführungsbeispiel ist das OLED-Display im Überlappungsbereich an einem Innenrand und/oder einer Innenmantelfläche des Stützrahmens anliegend angeordnet. Hierdurch kann eine einfache Verbindung hergestellt werden. Die Außenkontur des OLED-Displays in dem Kuppelbereich entspricht dabei bevorzugt irgendeiner Innenkontur an dem Stützrahmen, um wahlweise auch einen Formschluss sicherstellen zu können, z.B. ein Verrasten. In dem Überlappungsbereich ist die Geometrie des OLED-Displays damit an die Geometrie des Stützrahmens gekoppelt. Abgesehen von diesem Überlappungsbereich kann die Geometrie des OLED-Displays entkoppelt sein. Der Innenrand kann eine stirnseitige und/oder laterale Fixierung des OLED-Displays bewirken, je nachdem ob das OLED-Display vor oder hinter einem Ziffernblatt der Anzeigeeinrichtung angeordnet ist.

Bevorzugt ist das OLED-Display im Überlappungsbereich eben ausgebildet und flächig in einer Ebene in Bezug auf die Blickrichtung hinter einem Zeiger der Anzeigeeinrichtung angeordnet. Hierdurch kann eine besonders wenig Bauraumvolumen beanspruchende Anzeigevorrichtung bereitgestellt werden. Durch eine Kombination von gewölbten Abschnitten und eben ausgebildeten Abschnitten kann mit einem einzigen OLED-Display zum einen ein räumlicher Effekt und hieraus bereits eine hierarchische Darstellung von Information erfolgen, zum anderen kann Information in unmittelbarer Nähe der Anzeigeeinrichtung dargestellt werden, z.B. ein Achtung-Symbol genau neben der Geschwindigkeit 60 km/h der Anzeigeeinrichtung, um klarzustellen, dass die zulässige Geschwindigkeit von 60 km/h überschritten wurde. Mehrere unterschiedlich geformte, zweidimensionale und dreidimensionale Bereiche des OLED-Displays können zu einer besonders funktionellen Kombination analogen und lichttechnischen Darstellungsformen beitragen. Gleichzeitig erhält das Armaturenbrett einen in sich geschlossenen Gesamteindruck und es kann ein auch für einen Fahrer, der das Fahrzeug nicht kenn, sofort erkennbarer Bereich definiert werden, in welchem die für den Fahrzustand wichtigen Informationen angezeigt werden. Dies erleichtert z.B. die Bedienung von für den Fahrer zunächst unbekannten Leih-Fahrzeugen aus einer Fahrzeugflotte eines Leihfahrzeuganbieters (car sharing).

Bevorzugt weist das OLED-Display direkt neben dem Überlappungsbereich, also neben dem ebenen Abschnitt, einen konvex entgegen der Blickrichtung gewölbten Abschnitt auf. Weiter bevorzugt ist der konvex entgegen der Blickrichtung gewölbte Abschnitt mit einer Kontur ausgebildet, welche an die Kontur bzw. den Randverlauf eines Ziffernblatts der Anzeigeeinrichtung angepasst ist, so dass das Ziffernblatt in montiertem Zustand des OLED-Displays von dem konvex entgegen der Blickrichtung gewölbten Abschnitt umrahmt ist. Hierdurch kann auf einfache Weise eine optische und damit für einen Betrachter implizit auch eine funktionale Trennung des Bereichs der Anzeigeeinrichtung von einem rein digital oder durch Beleuchtung gebildeten Darstellungsbereich erfolgen. Dies erleichtert eine hierarchische Darstellung von Information oder das Auffinden bestimmter Information, die der Betrachter auf dem Armaturenbrett sucht.

Gemäß einem vorteilhaften Ausführungsbeispiel ist das OLED-Display in Bezug auf die Blickrichtung vollständig hinter der Anzeigeeinrichtung angeordnet ist und bildet eine Hintergrundbeleuchtung der Anzeigeeinrichtung. Hierdurch kann mit einem einfach zu realisierenden OLED-Display auch eine farblich oder in Bezug auf den Kontrast differenzierte Informationsübermittlung erfolgen, ohne dass zusätzliche Lichtquellen vorgesehen werden müssen. Durch unterschiedliche Ansteuerungsmöglichkeiten des OLED-Displays ist eine Vielzahl von Funktionen über das OLED-Display darstellbar und das Verständnis für den Fahrer ist erleichtert, z.B. im Fall einer Panne.

Gemäß einem vorteilhaften Ausführungsbeispiel weist die Anzeigeeinrichtung ein Ziffernblatt auf und das OLED-Display ist in Bezug auf die Blickrichtung vor dem Ziffernblatt angeordnet. Hierdurch kann unabhängig von dem Material bzw. der Lichtdurchlässigkeit des Ziffernblatts eine Darstellung von zusätzlicher Information erfolgen, und das OLED-Display kann auf besonders flexible Weise in Verbindung mit der Anzeigeeinrichtung vorgesehen werden, ohne dass die Anzeigeeinrichtung hierfür angepasst werden muss. Dies ist z.B. für Fahrzeugserien von Interesse, bei welchen es Modellvarianten gibt, die wahlweise mit einem elektrischen Zusatzantrieb ausgestattet werden können. Dann kann z.B. nur für die Hybridfahrzeuge mit dem Zusatzantrieb das OLED-Display vorgesehen sein, z.B. um zusätzliche Funktionen einer Fahrzeugbatterie anzeigen zu können, insbesondere den Verbrauch elektrischer Energie oder die voraussichtliche Reichweite im Zusammenhang mit einer aktuellen von der Anzeigeeinrichtung angezeigten Fahrzeuggeschwindigkeit.

Gemäß einem vorteilhaften Ausführungsbeispiel ist das OLED-Display überlappend mit einer weiteren Anzeigeeinrichtung angeordnet und weist einen weiteren Durchlass auf. Dabei kann es zwischen den Anzeigeeinrichtungen mit einer in Vorwärtsrichtung (x) gesehen eindimensionalen oder zweidimensionalen konkaven Wölbung ausgebildet sein. Hierdurch ist eine zweckdienliche und großflächige Integration des OLED-Displays in häufig anzutreffenden Armaturenbrett-Konfigurationen erzielbar. Es kann eine Armaturentafel bereitgestellt werden, die in sich einheitlich aufgebaut ist und auf gleichförmige Weise hinterleuchtet werden kann. Dies liefert den Vorteil, dass die Hinterleuchtungsstärke auch auf die Lichtstärke der Umgebung, sei es am Tag oder in der Nacht, angepasst werden kann und auf blendende punktuelle Lichtquellen verzichtet werden kann oder diese für wichtige Warnmeldungen vorbehalten bleiben können.

Als eine eindimensionalen konkave Wölbung ist dabei eine Wölbung zu verstehen, welche allein durch einen gekrümmten Verlauf in einer x-z-Ebene beschrieben werden kann. Als eine zweidimensionalen konkave Wölbung ist dabei eine Wölbung zu verstehen, welche durch einen gekrümmten Verlauf in einer x-z-Ebene und in einer x-y-Ebene beschrieben wird, wobei die Vorwärtsrichtung der x-Richtung entspricht.

Gemäß einem vorteilhaften Ausführungsbeispiel ist das OLED-Display in einem Bereich angrenzend an den Überlappungsbereich mit einer in einer Vorwärtsrichtung gesehen konvexen Wölbung ausgebildet. Hierdurch kann dem OLED-Display zum einen eine gute Eigenstabilität verliehen werden, zum anderen kann eine Kontur der gesamten Anzeige durch das OLED-Display hervorgehoben werden, ein räumlicher Eindruck verbessert werden, und die dargestellte Information besser voneinander abgegrenzt werden. Durch einen die Anzeigeeinrichtung rahmenartige umgrenzenden konvexen Bereich kann auch eine hierarchische Abgrenzung der dargestellten Information erfolgen, und das OLED-Display kann eine Geometrie oder Kontur der Anzeigevorrichtung übernehmen und so einen in sich geschlossenen Bereich zur Darstellung der Information schaffen.

Gemäß einem vorteilhaften Ausführungsbeispiel weist die Anzeigevorrichtung ferner einen berührungsempfindlichen Bedienabschnitt auf und ist als Anzeige- und Bedienvorrichtung ausgebildet. Durch die Kombination eines berührungsempfindlichen Bedienabschnitts mit dem OLED-Display oder dessen Integration in das OLED-Display kann eine multifunktionelle Anzeigevorrichtung gebildet werden, bei welcher auf engstem Raum eine Vielzahl an Anzeige- und Bedienfunktionen verwirklicht werden können. Der berührungsempfindliche Bedienabschnitt ist bevorzugt in dem gewölbten Bereich des OLED-Displays vorgesehen, oder, wenn das OLED-Display einen ebenen Bereich aufweist, welcher nicht hinter einer Anzeigeeinrichtung angeordnet ist, wahlweise (auch) in diesem ebenen Bereich.

Bevorzugt ist der berührungsempfindliche Bedienabschnitt mit dem OLED-Display gekoppelt, so dass ein Insasse des Fahrzeugs eine auf dem OLED-Display dargestellte Information auswählen kann oder eine Bedienung von Standard-Funktionen, die z.B. über fest oder variable angeordnete Symbole ansteuerbar sind, vornehmen kann. Insbesondere kann der berührungsempfindliche Bedienabschnitt als Touchscreen ausgebildet sein, welcher von dem OLED-Display hinterleuchtet ist.

Gemäß einem vorteilhaften Ausführungsbeispiel weist das OLED-Display eine Ansteuerungsmatrix auf, welche eine Struktur auf, die um den Durchlass herumgeführt ist. Hierdurch kann unabhängig von einer spezifischen Geometrie des Durchlasses eine Ansteuerung des OLED-Displays auf einfache Weise erfolgen, und eine neue Konfiguration der Steuerung ist nicht erforderlich. Dies liefert den Vorteil, dass das OLED-Display bei voneinander abweichenden Durchlass-Geometrien dennoch auf zumindest annähernd gleiche Weise betrieben werden kann.

Bevorzugt ist die Struktur in einer Polymerschicht des OLED-Displays vorgesehen und durch kontinuierliche, ununterbrochene Zeilen und Spalten gebildet, welche den Durchlass jeweils umrahmen.

Gemäß einem vorteilhaften Ausführungsbeispiel weist die Anzeigevorrichtung eine Steuereinrichtung zum Betreiben des OLED-Displays auf. Hierdurch kann eine funktionsfähige Baugruppe bereitgestellt werden, welche in einer Vielzahl unterschiedlicher Fahrzeuge eingebaut werden kann und mit einem Fahrzeugsystem gekoppelt werden kann. Die Steuereinrichtung ist dabei dazu ausgebildet, die Ansteuerungsmatrix des OLED-Displays in Abhängigkeit der um den Durchlass geführten Struktur anzusteuern.

Gemäß einem vorteilhaften Ausführungsbeispiel ist die Anzeigevorrichtung in einem Fahrzeug in Vorwärtsrichtung gesehen hinter einem Lenkrad des Fahrzeugs angeordnet und mit einer Einrichtung zum Betreiben der Anzeigeeinrichtung gekuppelt. Die Anordnung eines OLED-Displays mit dreidimensionaler Geometrie in diesem Bereich des Fahrzeugs liefert den Vorteil einer hierarchisch aufgebauten Informationsdarstellung sowie einer anpassbaren Ausleuchtung des wichtigsten Armaturenbrettbereichs, insbesondere in Abhängigkeit des Fahrzustandes und/oder von Umgebungsbedingungen wie z.B. einer Tageslichtstärke.

Die vorstehend in der Beschreibung genannten Merkmale und Merkmalskombinationen sowie die nachfolgend in der Figurenbeschreibung genannten oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen, wobei gleiche oder funktionsgleiche Elemente mit identischen Bezugszeichen versehen sind. Dabei zeigen:
- Fig. 1a: in einer Schnittansicht in schematischer Darstellung eine Anzeigeeinheit mit einem OLED-Display;
- Fig. 1b: in einer Frontansicht in schematischer Darstellung die Anzeigeeinheit der Fig. 1a;
- Fig. 2a: in einer Schnittansicht in schematischer Darstellung eine Anzeigevorrichtung mit einem OLED-Display gemäß einem ersten Ausführungsbeispiel der Erfindung, insbesondere ein Kombiinstrument mit Mitteldisplay und analogen Anzeigen;
- Fig. 2b: in einer Frontansicht in schematischer Darstellung die Anzeigevorrichtung der Fig. 2a;
- Fig. 3a: in einer Schnittansicht in schematischer Darstellung eine Anzeigevorrichtung mit einem OLED-Display gemäß einem zweiten Ausführungsbeispiel der Erfindung;
- Fig. 3b: in einer Frontansicht in schematischer Darstellung die Anzeigevorrichtung gemäß der Fig. 3a mit Anzeigeeinrichtungen;
- Fig. 3c: in einer Frontansicht in schematischer Darstellung die Anzeigevorrichtung gemäß der Fig. 3a, 3b, wobei die Anzeigeeinrichtungen nicht dargestellt sind;
- Fig. 4a: in einer Seitenansicht in schematischer Darstellung ein Fahrzeug mit einer Anzeigevorrichtung gemäß einem der Ausführungsbeispiele der Erfindung;
- Fig. 4b: in einer detaillierten Seitenansicht in schematischer Darstellung die Anzeigevorrichtung gemäß der Fig. 4a;
- Fig. 5a: in einer Draufsicht in schematischer Darstellung die Struktur eines herkömmlichen OLED-Displays ohne Durchlass; und
- Fig. 5b: in einer Draufsicht in schematischer Darstellung die Struktur eines einen Durchlass aufweisenden OLED-Displays für eine erfindungsgemäße Anzeigevorrichtung.

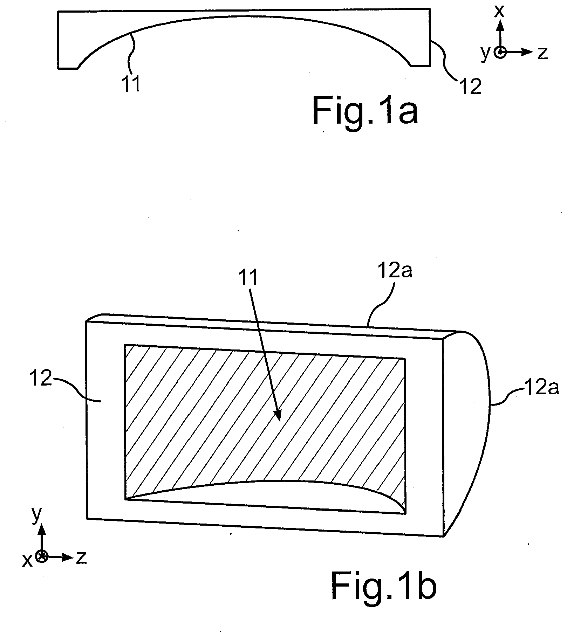

In der Fig. 1a ist eine Anzeigeeinheit mit einem OLED-Display 11 mit einer konkaven Wölbung, also einer Wölbung nach innen in x-Richtung gezeigt. Hierdurch stellt sich für einen Betrachter bei Betrachtung in x-Richtung eine Tiefenwirkung ein, und es entsteht ein in sich abgeschlossener Eindruck. Zudem kann das OLED-Display 11 gut gegen Streustrahlung geschützt werden.

In der Fig. 1b ist die Anzeigeeinheit in einer Blickrichtung in x-Richtung gezeigt. Der Stützrahmen 12 weist eine Rahmenkontur 12a auf, durch welche die Wölbung des OLED-Displays 11 vorgegeben werden kann. Die Wölbung kann zum einen konkav in Bezug auf eine x-Richtung ausgebildet sein, zum anderen auch konkav in Bezug auf eine z-Richtung, also eine elliptische Negativform für das OLED-Display 11 bilden.

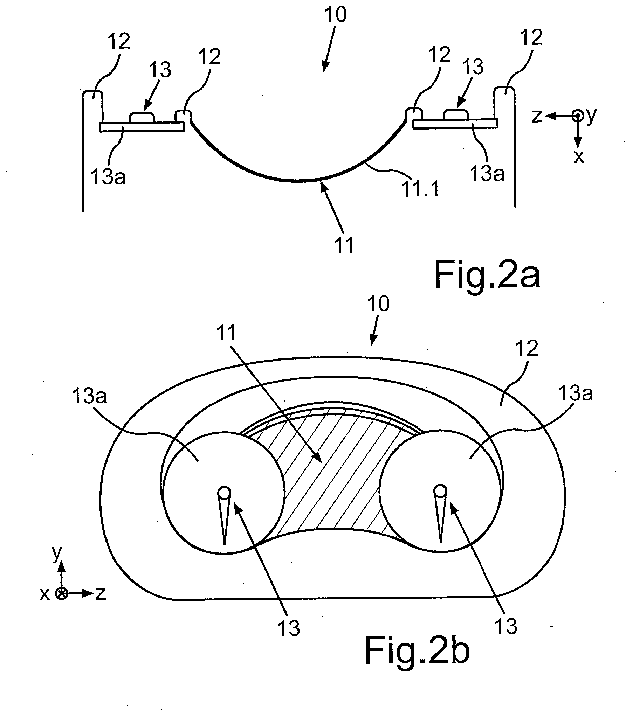

In der Fig. 2a ist eine Anzeigevorrichtung 10 mit einem in einem Teilbereich vorgesehenen OLED-Display 11. Das OLED-Display 11 ist hier zwischen zwei Anzeigeeinrichtungen 13 vorgesehen, ohne dass es mit den Anzeigeeinrichtungen 13 im Hinblick auf die Darstellung von Information gekoppelt ist. Die Anzeigeeinrichtungen 13 weisen jeweils ein Ziffernblatt 13a auf. Zwischen den Anzeigeeinrichtungen 13 und dem OLED-Display 11 ist ein Stützrahmen 12 angeordnet, welcher insbesondere an dieser Schnittstelle auch die Funktion einer Blende übernehmen kann. Das OLED-Display 11 weist eine in x-Richtung entsprechend einer Vorwärtsrichtung gesehen konkave Wölbung 11.1 auf, also eine Wölbung nach hinten bzw. innen.

In der Fig. 2b ist in einer Frontansicht der Stützrahmen 12 dargestellt, welcher zwei Anzeigeeinrichtungen 13 umgibt, und zwischen den Anzeigeeinrichtungen 13 ist das OLED-Display 11 angeordnet. Das OLED-Display 11 füllt dabei den Bereich zwischen den beiden Anzeigeeinrichtungen 13 aus, insbesondere zwischen den Ziffernblättern 13a, und folgt an einer Oberseite und an einer Unterseite einer Kontur des Stützrahmens 12. Auch die Schnittstelle zwischen den Anzeigeeinrichtungen 13 und dem OLED-Display 11 ist geometrisch auf die Anzeigeeinrichtungen 13 angepasst, das heißt, das OLDE-Display 11 grenzt unmittelbar an die Anzeigeeinrichtungen 13 an. Hierdurch ergibt sich der Vorteil, dass kein Platz zwischen den Anzeigeeinrichtungen 13 ungenutzt bleibt, denn das OLED-Display 11 kann flächig beleuchtet werden und Informationen darauf überall dargestellt werden, also im gesamten Bereich zwischen den Anzeigeeinrichtungen 13.

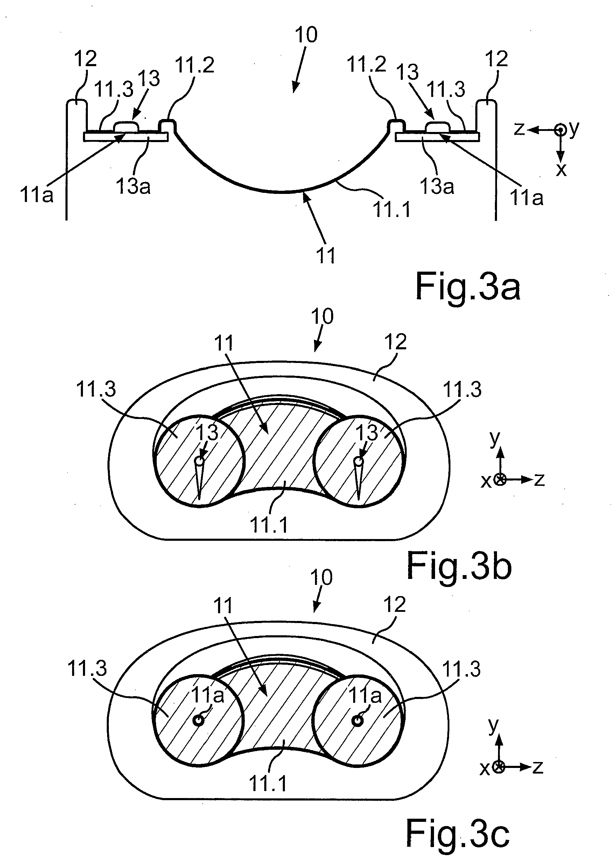

In der Fig. 3a ist ein Ausführungsbeispiel gezeigt, bei welchem das OLED-Display 11 den gesamten Bereich zwischen zwei äußeren Schenkeln des Stützrahmens 12 füllt, das heißt, das OLED-Display 11 liegt auch im Bereich von Ziffernblättern 13a der Anzeigeeinrichtungen 13 vor, also im Überlappungsbereich, was insbesondere dadurch möglich ist, dass es Durchlässe, Aussparungen oder Bohrungen 11a aufweist, durch welche Zeiger der Anzeigeeinrichtungen 13 geführt oder zumindest angesteuert werden können. In den Durchlässen 11a ist mit anderen Worten eine Kupplung, z.B. eine Welle, zwischen den Zeigern und einem jeweiligen Stellantrieb vorgesehen. Auf diese Weise kann auch eine Beleuchtung der Anzeigeeinrichtungen 13 erfolgen, ohne dass hierzu eigene separate Lichtquellen vorgesehen sein müssen. Die Anzeigevorrichtung 10 kann vollflächig mittels des OLED-Displays 11 beleuchtet werden. In der gezeigten Variante ist das OLED-Display 11 im Bereich der Ziffernblätter 13a eben ausgebildet und in x-Richtung gesehen vor den Ziffernblättern 13a angeordnet.

Das OLED-Display 11 ist in einer x- bzw. z-Richtung zumindest bereichsweise konkav gewölbt, es kann zudem auch in Bezug auf die y-Richtung eine Wölbung aufweisen. Das OLED-Display 11 ist in der x-Richtung auch konvex gewölbt, insbesondere in einem Bereich neben den Anzeigeeinrichtungen 13, in welchem es von einer ebenen Geometrie hinter den Anzeigeeinrichtungen 13 in eine konkave Geometrie zwischen den Anzeigeeinrichtungen 13 übergeht. Hierdurch kann eine optische Trennung der einzelnen Abschnitte des OLED-Displays 11 erfolgen, und dem OLED-Display 11 kann eine Eigenstabilität bzw. eine Steifigkeit verliehen werden, so dass es auf eine Berührung durch Gegenstände oder Personen nicht allzu elastisch reagiert, sondern auch ohne gesonderte Strukturbauteile einen Widerstand gegenüber einer Berührung aufbringen kann. Dies ist vorteilhaft in Verbindung mit einer berührungsempfindlichen Schicht, mit welcher das OLED-Display 11 gekoppelt sein kann. In der Summe weist das OLED-Display 11 drei unterschiedlich geformte Abschnitte auf, nämlich eine konkave Wölbung 11.1 in einem Bereich zwischen den Anzeigeeinrichtungen 13, dann eine konvexe Wölbung 11.2 in mindestens einem Bereich neben einer der Anzeigeeinrichtungen 13, und einen ebenen Abschnitt 11.3 hinter mindestens einer der Anzeigeeinrichtungen 13 bzw. zumindest hinter einem Zeiger/einer Zeigerfahne der Anzeigeeinrichtungen 13.

In der Fig. 3b ist das OLED-Display 11 in Vorwärtsrichtung x hinter den Zeigern der Anzeigeeinrichtungen 13 angeordnet. Dabei sind Ziffernblätter 13a oder vergleichbare Informationsträger der Anzeigeeinrichtungen 13 hinter den Zeigern angedeutet, und das OLED-Display 11 ist vor diesen Ziffernblättern angeordnet. Das OLED-Display 11 kann wahlweise vor oder hinter dem jeweiligen Ziffernblatt 13a angeordnet sein, auch in dem einen Fall vor und in dem anderen Fall hinter dem Ziffernblatt 13a. In der Fig. 3b ist das OLED-Display 11 als ein zusammenhängendes integrales OLED-Display 11 gezeigt. Es folgt der Kontur des Stützrahmens 12 und bildet eine einzige flächige beleuchtbare Vorrichtung zum Darstellen von Informationen, wahlweise auch zum Bedienen.

In der Fig. 3c sind Zeiger der Anzeigeeinrichtungen 13 nicht dargestellt, um hervorzuheben, wo Aussparungen bzw. Bohrungen 11a in dem OLEd-Display 11 vorgesehen sein können. Das OLED-Display 11 kann je nach Ausgestaltung der Zeiger mittels der Zeiger selbst in der Fahrzeugarmatur zumindest teilweise fixiert werden, das heißt, die Zeiger können verhindern, dass das OLED-Display 11 sich seitlich oder in einer Tiefenrichtung verlagert. Gemäß einer Variante ist das OLED-Display 11 mit seiner Bohrung 11a durch eine Hülse (nicht dargestellt) geführt, in welcher eine Zeigereinrichtung der Anzeigeeinrichtung 13 gelagert ist..

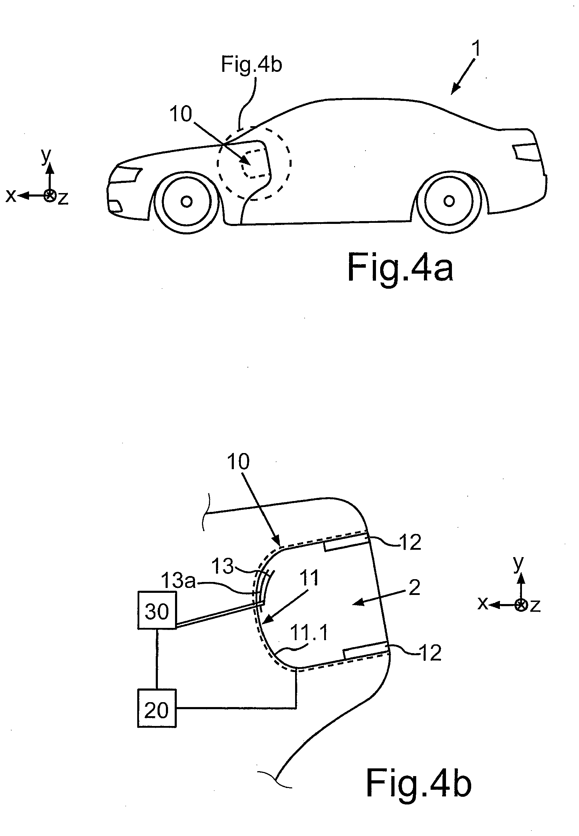

In der Fig. 4a ist ein Fahrzeug 1 gezeigt, bei welchem im Bereich eines Lenkrads eine Instrumentenvorrichtung bzw. ein Schnittstellenbauteil 10 vorgesehen ist, welches ein OLED-Display umfasst. Das OLED-Display kann gebogen sein, sei es konvex und/oder konkav, und somit kann das Schnittstellenbauteil 10 in Abhängigkeit einer bestimmten Geometrie eines Instrumententafelträgers auf einfache Weise in das Fahrzeug 1 integriert werden and dabei auch mit einer weiteren Anzeigeeinrichtung gekuppelt werden.

In der Fig. 4b ist im Detail gezeigt, auf welche Weise ein OLED-Display 11 einer Instrumentenvorrichtung 10 bzw. eines Schnittstellenbauteils 10 mit einem Instrumententafelträger oder einer Fahrzeugarmatur gekuppelt werden kann. Das Schnittstellenbauteil 10 ist in einer Aussparung 2 eines Armaturenbretts des Fahrzeugs vorgesehen, und weist einen Stützrahmen 12 auf, über welchen es mit der Fahrzeugarmatur gekuppelt werden kann. Das OLED-Display 11 ist gemäß der Geometrie der Fahrzeugarmatur bzw. des Instrumententafelträgers in der Aussparung 2 angeordnet, das heißt, es folgt der Kontur der Aussparung 2 und ist entsprechend gewölbt, sei es konvex und/oder konkav. Eine Anzeigeeinrichtung 13 ist zumindest teilweise durch das OLED-Display 11 hindurch geführt und in Verbindung mit einer Stelleinrichtung 30 bzw. einem Stellantrieb. Das OLED-Display 11 selbst ist in Verbindung mit einer Steuereinrichtung 20, welche dazu ausgebildet ist, das OLED-Display 11 zu betreiben, insbesondere zu beleuchten, und welche auch mit der Stelleinrichtung 30 bzw. dem Motor 30 gekoppelt ist.

Bei dem gezeigten Ausführungsbeispiel ist das OLED-Display 11 in x-Richtung hinter einem Ziffernblatt 13a der Anzeigeeinrichtung 13 angeordnet. Der mit der Anzeigeeinrichtung 13 überlappenden Bereich des OLED-Displays 11 ist als konkave Wölbung 11.1 ausgebildet. Mit anderen Worten ist OLED-Display 11 im Bereich der Anzeigeeinrichtung 13 nicht eben sondern dreidimensional gewölbt ausgeführt. Hierdurch kann eine Be- bzw. Hinterleuchtung auf besonders flexible Weise bereitgestellt werden.

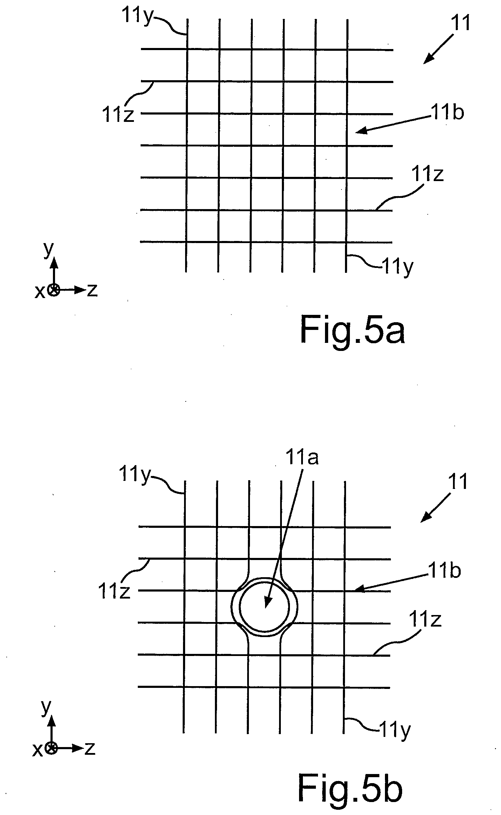

In der Fig. 5a ist eine Ansteuerungsmatrix 11b eines OLED-Displays 11 ohne Durchlass gezeigt. Die Ansteuerungsmatrix 11b weist Zeilen 11z und Spalten 11y auf, die in einem definierten Abstand und zumindest annähernd parallel zueinander verlaufen.

In der Fig. 5b ist eine Ansteuerungsmatrix 11b eines OLED-Displays 11 mit einem kreisrunden Durchlass 11a gezeigt. Die Ansteuerungsmatrix 11b weist Zeilen 11z und Spalten 11y auf, die in einem definierten Abstand und zumindest annähernd parallel zueinander verlaufen, im Bereich des Durchlasses 11a jedoch um den Durchlass 11a herumgeführt sind. Im vorliegenden Fall sind jeweils zwei Zeilen 11z und Spalten 11y nicht streng parallel, sondern von ihrem eigentlichen Verlauf umgelenkt und umrahmen den Durchlass 11a. Der Durchlass 11a ist dabei durch zwei Zeilen 11z und zwei Spalten 11y eingefasst und das OLED-Display 11 kann auch in einem Randbereich des Durchlasses 11a angesteuert werden.

## Patentansprüche

1. Anzeigevorrichtung (10) für ein Fahrzeug (1), die zur Darstellung von Information und zur Anordnung in einem Innenraum des Fahrzeugs (1) in Bezug auf eine Blickrichtung (x) eines Fahrers des Fahrzeugs (1) ausgebildet ist, mit:
- einer Anzeigeeinrichtung (13), die mit einer Einrichtung (30) zum Betreiben der Anzeigeeinrichtung (13) verbindbar ist;
- einem eine dreidimensionale Geometrie aufweisenden OLED-Display (11) zum Emittieren von Licht, wobei das OLED-Display (11) in Blickrichtung (x) gesehen mit der Anzeigeeinrichtung (13) überlappend angeordnet ist und im Überlappungsbereich (11.3) einen Durchlass (11a) aufweist, über welchen die Anzeigeeinrichtung (13) mit der Einrichtung (30) verbindbar ist;
- einem Stützrahmen (12), der zur Anordnung des OLED-Displays (11) ausgebildet ist;
**dadurch gekennzeichnet, dass** das OLED-Display (11) in einem Kuppelbereich an den Stützrahmen (12) gekuppelt ist und in einem Anzeigebereich derart geometrisch geformt ist, dass es bezüglich der dreidimensionalen Formgebung des OLED-Displays (11) zumindest teilweise losgelöst von dem Stützrahmen (12) angeordnet ist.

2. Anzeigevorrichtung (10) nach Anspruch 1, **dadurch gekennzeichnet, dass** das OLED-Display (11) im Überlappungsbereich (11.3) an einem Innenrand des Stützrahmens (12) anliegend angeordnet ist.

3. Anzeigevorrichtung (10) nach einem der vorhergehenden Ansprüche, **dadurch gekennzeichnet, dass** das OLED-Display (11) in Bezug auf die Blickrichtung (x) vollständig hinter der Anzeigeeinrichtung (13) angeordnet ist und eine Hintergrundbeleuchtung der Anzeigeeinrichtung (13) bildet.

4. Anzeigevorrichtung (10) nach Anspruch 1 oder 2, **dadurch gekennzeichnet, dass** die Anzeigeeinrichtung (13) ein Ziffernblatt (13a) aufweist und das OLED-Display (11) in Bezug auf die Blickrichtung (x) vor dem Ziffernblatt (13a) angeordnet ist.

5. Anzeigevorrichtung (10) nach einem der vorhergehenden Ansprüche, **dadurch gekennzeichnet, dass** das OLED-Display (11) überlappend mit einer weiteren Anzeigeeinrichtung (13) angeordnet ist und einen weiteren Durchlass (11a) aufweist.

6. Anzeigevorrichtung (10) nach einem der vorhergehenden Ansprüche, **dadurch gekennzeichnet, dass** das OLED-Display (11) in einem Bereich angrenzend an den Überlappungsbereich mit einer in einer Vorwärtsrichtung (x) gesehen konvexen Wölbung (11.2) ausgebildet ist.

7. Anzeigevorrichtung (10) nach einem der vorhergehenden Ansprüche, **dadurch gekennzeichnet, dass** die Anzeigevorrichtung (10) ferner einen berührungsempfindlichen Bedienabschnitt aufweist und als Anzeige- und Bedienvorrichtung ausgebildet ist.

8. Anzeigevorrichtung (10) nach einem der vorhergehenden Ansprüche, **dadurch gekennzeichnet, dass** das OLED-Display (11) eine Ansteuerungsmatrix aufweist, welche eine Struktur (11y, 11z) aufweist, die um den Durchlass (11a) herumgeführt ist.

9. Anzeigevorrichtung (10) nach einem der vorhergehenden Ansprüche, **dadurch gekennzeichnet, dass** die Anzeigevorrichtung (10) eine Steuereinrichtung zum Betreiben des OLED-Displays (11) aufweist.

10. Fahrzeug (1) mit einer Anzeigevorrichtung (10) nach einem der Ansprüche 1 bis 9.

11. Fahrzeug (1) nach Anspruch 10, **dadurch gekennzeichnet, dass** die Anzeigevorrichtung (10) in Vorwärtsrichtung (x) gesehen hinter einem Lenkrad des Fahrzeugs (1) angeordnet ist und mit einer Einrichtung zum Betreiben der Anzeigeeinrichtung (13) gekoppelt ist.

## Claims

1. Display device (10) for a vehicle (1), which is designed to display information and to be arranged in an interior of the vehicle (1) in relation to a viewing direction (x) of a driver of the vehicle (1), having:
- a display device (13), which is connectable to a device (30) for operating the display device (13);
- an OLED display (11) comprising a three-dimensional geometry to emit light, wherein the OLED display (11) is arranged overlapping with the display device (13) viewed in the viewing direction (x) and has a passage (11a) in the overlapping region (11.3) via which the display device (13) is connectable to the device (30);
- a support frame (12), which is designed to arrange the OLED display (11);
**characterised in that** the OLED display (11) is coupled to the support frame (12) in a coupling region and is formed geometrically in a display region such that it is arranged in relation to the three-dimensional shape of the OLED display (11) at least partially detached from the support frame (12).

2. Display device (10) according to claim 1, **characterised in that** the OLED display (11) is arranged abutting an inner edge of the support frame (12) in the overlapping region (11.3).

3. Display device (10) according to any one of the preceding claims, **characterised in that** the OLED display (11) is arranged fully behind the display device (13) in relation to the viewing direction (x) and forms a backlight of the display device (13).

4. Display device (10) according to claim 1 or 2, **characterised in that** the display device (13) has a dial (13a) and the OLED display (11) is arranged in front of the dial (13a) in relation to the viewing direction (x).

5. Display device (10) according to any one of the preceding claims, **characterised in that** the OLED display (11) is arranged overlapping with an additional display device (13) and has an additional passage (11a).

6. Display device (10) according to any one of the preceding claims, **characterised in that** the OLED display (11) is designed in a region abutting the overlapping region with a convex curvature (11.2) viewed in a forwards direction (x).

7. Display device (10) according to any one of the preceding claims, **characterised in that** the display device (10) further has a touch-sensitive operating section and is designed as a display and operating device.

8. Display device (10) according to any one of the preceding claims, **characterised in that** the OLED display (11) has an actuation matrix which has a structure (11y, 11z) that is guided around the passage (11a).

9. Display device (10) according to any one of the preceding claims, **characterised in that** the display device (10) has a control device for operating the OLED display (11).

10. Vehicle (1) with a display device (10) according to any one of claims 1 to 9.

11. Vehicle (1) according to claim 10, **characterised in that** the display device (10) is arranged behind a steering wheel of the vehicle (1) viewed in the forward direction (x) and is coupled to a device for operating the display device (13).

## Revendications

1. Dispositif d'affichage (10) pour un véhicule (1), qui est réalisé pour la présentation d'informations et pour l'agencement dans un habitacle du véhicule (1) par rapport à une direction du regard (x) d'un conducteur du véhicule (1), avec :
- un dispositif d'affichage (13), qui peut être relié à un dispositif (30) de fonctionnement du dispositif d'affichage (13) ;
- un écran OLED (11) présentant une géométrie tridimensionnelle pour l'émission de lumière, dans lequel l'écran OLED (11) est agencé de manière chevauchante avec le dispositif d'affichage (13) vu dans la direction du regard (x) et présente dans la zone de chevauchement (11.3) un passage (11a) par le biais duquel le dispositif d'affichage (13) peut être relié au dispositif (30) ;
- un cadre de support (12) qui est réalisé pour l'agencement de l'écran OLED (11) ;
**caractérisé en ce que** l'écran OLED (11) est couplé dans une zone de couplage au niveau du cadre de support (12) et est formé géométriquement dans une zone d'affichage de sorte qu'il est agencé détaché au moins en partie du cadre de support (12) par rapport à la forme tridimensionnelle de l'écran OLED (11).

2. Dispositif d'affichage (10) selon la revendication 1, **caractérisé en ce que** l'écran OLED (11) est agencé en s'appliquant dans la zone de chevauchement (11.3) sur un bord intérieur du cadre de support (12).

3. Dispositif d'affichage (10) selon l'une quelconque des revendications précédentes, **caractérisé en ce que** l'écran OLED (11) est agencé complètement derrière le dispositif d'affichage (13) par rapport à la direction du regard (x) et forme un rétroéclairage du dispositif d'affichage (13).

4. Dispositif d'affichage (10) selon la revendication 1 ou 2, **caractérisé en ce que** le dispositif d'affichage (13) présente un cadran (13a) et l'écran OLED (11) est agencé par rapport à la direction du regard (x) devant le cadran (13a).

5. Dispositif d'affichage (10) selon l'une quelconque des revendications précédentes, **caractérisé en ce que** l'écran OLED (11) est agencé de manière chevauchante avec un autre dispositif d'affichage (13) et présente un autre passage (11a).

6. Dispositif d'affichage (10) selon l'une quelconque des revendications précédentes, **caractérisé en ce que** l'écran OLED (11) est réalisé dans une zone adjacente à la zone de chevauchement avec une courbure convexe (11.2) vue dans une direction vers l'avant (x).

7. Dispositif d'affichage (10) selon l'une quelconque des revendications précédentes, **caractérisé en ce que** le dispositif d'affichage (10) présente en outre une section de commande sensible au contact et est réalisé en tant que dispositif d'affichage et de commande.

8. Dispositif d'affichage (10) selon l'une quelconque des revendications précédentes, **caractérisé en ce que** l'écran OLED (11) présente une matrice de commande, laquelle présente une structure (11y, 11z) qui est guidée autour du passage (11a).

9. Dispositif d'affichage (10) selon l'une quelconque des revendications précédentes, **caractérisé en ce que** le dispositif d'affichage (10) présente un dispositif de commande pour le fonctionnement de l'écran OLED (11).

10. Véhicule (1) avec un dispositif d'affichage (10) selon l'une quelconque des revendications 1 à 9.

11. Véhicule (1) selon la revendication 10, **caractérisé en ce que** le dispositif d'affichage (10) est agencé derrière un volant du véhicule (1) vu dans la direction vers l'avant (x) et est couplé à un dispositif de fonctionnement d'un dispositif d'affichage (13).
